# EUROPEAN PATENT APPLICATION

(11) **EP 4 714 581 A1**
(43) Date of publication of application: **25.03.2026**
(21) Application number: 23960620.5
(22) Date of filing: 11.12.2023
(51) Int. Cl.: B23K 9/16, B23K 9/095, B23K 9/235, B23K 9/32, B23K 37/00

(54) **FUSION WELDING PROCESS FOR TITANIUM STEEL COMPOSITE PLATE**

(30) Priority: 07.12.2023 CN 202311674070
(71) Applicant: Angang Steel Company Limited, Anshan, Liaoning 114003 (CN)
(72) Inventor: HU, Fengya, Anshan, Liaoning 114003 (CN); WANG, Jiaji, Anshan, Liaoning 114003 (CN); HAN, Yanfa, Anshan, Liaoning 114003 (CN); FU, Bo, Anshan, Liaoning 114003 (CN); YU, Yang, Anshan, Liaoning 114003 (CN); LIU, Jin, Anshan, Liaoning 114003 (CN); ZHANG, Zhiqiang, Anshan, Liaoning 114003 (CN); LIU, Xiangfeng, Anshan, Liaoning 114003 (CN); GUO, Peng, Anshan, Liaoning 114003 (CN)
(74) Representative: Murgitroyd & Company
(86) International application number: PCT/CN2023/137803
(87) International publication number: WO 2025/118309

(57) **Abstract**

The present invention relates to a fusion welding process for a titanium steel composite plate. The process comprises: welding groove processing: matching different groove processing forms according to different uses of titanium steel composite plates; welding groove deep processing: using a CMT welding method to perform copper cladding treatment on groove interfaces of titanium steel composite plates to be welded; performing spot fixation welding on two composite plates after the cladding treatment; welding a titanium cladding layer, a pure copper intermediate layer and a steel base layer. The present invention forms crack-free welded joints by means of designing an intermediate welding material, specific groove types, groove deep processing and matching welding, solving the technical problem of titanium steel not being able to be welded, and ensuring the integrity of the welded joints, making the invention applicable to complex structures, and making large-scale application of titanium steel composite plates possible.

## Description

### TECHNICAL FIELD

The present invention relates to the development of welding materials and the application of supporting welding process technologies, in particular to a fusion welding process for titanium-steel composite plates.

### BACKGROUND ART

Titanium-steel composite plates combine the good weldability, formability, thermal conductivity, and good mechanical properties of carbon steel with the excellent corrosion resistance of titanium cladding layer. As a result, they are widely used in industries such as petroleum, chemical industry, metallurgy, light industry, salt chemical industry, power station auxiliary equipment, seawater desalination, shipbuilding, and electric power. In practical applications of titanium-steel composite plates, it is inevitable to involve the welding connection problem. Therefore, forming good welded joints and ensuring effective connection performance have become fundamental conditions that limit the widespread application of titanium-steel composite plates. When titanium and steel are directly welded, a large number of brittle phases will be formed, making the weld brittle and causing cracks. At the same time, the weld metal and heat-affected zone of the titanium cladding layer are also susceptible to contamination by elements such as oxygen, hydrogen, and carbon, forming interstitial solid solutions or intermetallic compounds, resulting in a sharp decline in the mechanical properties of the joints, namely plasticity and toughness, causing the formation of cracks. Therefore, traditional welding methods for titanium-steel composite plates at present are indirect "patching" welding methods, where the two metals are welded separately without melting into each other.

However, traditional welding manufacturing technologies for titanium-steel composite plates are cumbersome, involve complex processes, have a probability of defects, and suffer from low welding reliability, hindering their further promotion and application. Moreover, traditional welding of titanium-steel composite plates involves steel-to-steel welding and titanium-to-titanium welding, leaving a gap between the steel and titanium layers, which is equivalent to artificially creating a crack initiation site, reducing the load-bearing capacity of the component and increasing the risk of potential failure. This is the fundamental reason why titanium-steel composite plates cannot be used in critical structures.

Therefore, it is necessary to develop a new welding process for titanium-steel composite plates to address the aforementioned problems.

### SUMMARY

The objective of the present invention is to provide a fusion welding process for titanium-steel composite plates to ultimately form a crack-free welded joint by combining the design of an intermediate welding material, specific groove types, groove deep processing techniques, and matching welding processes, genuinely resolving the technical challenge of welding titanium and steel, and ensuring the integrity of the welded joints while offering excellent fatigue and corrosion resistance. As a result, the process of the present invention enables the application of titanium-steel composite plates in complex structures, making their widespread use a viable possibility.

The present invention adopts the following technical solutions:
The present invention provides a fusion welding process for titanium-steel composite plates, including the following steps:
Machine a welding groove on a titanium-steel composite plate to be welded. Different groove forms are employed based on different uses of the titanium-steel composite plate;
Perform deep processing on the welding groove, including using CMT (Cold Metal Transfer) welding to perform copper cladding treatment on the titanium/steel interface of the groove on the titanium-steel composite plate to be welded;
Perform tack welding on two cladding-treated composite plates; and
Perform welding of titanium layer, pure copper intermediate layer, and steel base layer. Additionally, the welding of titanium cladding layer, pure copper intermediate layer, and steel base layer has no fixed order, and the welding order is selected according to the groove form.

Further, the groove is machined to remove an appropriate thickness of carbon steel, and the machining at the titanium/steel interface is performed in a single continuous cut without tool change. In addition, oxides is firstly removed from the weld preparation area on the carbon steel side using an angle grinder prior to welding, and the interface is wiped with industrial alcohol until it reveals a metallic luster.

Further, the copper cladding treatment on the titanium/steel interface of the groove using CMT welding includes the following parameters: a welding current of 120-200 A, a welding speed of 200-400 mm/min, a swing width of a welding torch of 1-2mm, a fusion ratio of a welded joint controlled to be 0.2-0.5, and a height of the copper cladding layer at the titanium/steel interface of less than 1 mm.

Further, the welding process of titanium cladding layer is protected by a high flow of gas.

Further, the welding process of pure copper intermediate layer is protected by argon and uses CMT welding with a gas flow rate of 10-20 L/min, a welding current of 160-200 A and a welding speed of 200-350 mm/min, and a swing width of a welding torch matching with the groove width. Additionally, during the welding process, a water cooling device is provided on the backside of the composite plate to ensure uniform coverage of the copper intermediate layer with a welding thickness of 1-2 mm on the carbon steel surface, guaranteeing that no titanium-iron compounds form near the titanium/steel interface within 0-1 mm due to transitory high temperatures.

Further, during the welding process of steel base layer, a water cooling device maintains continuous water flow, and selections of welding materials and processes are based on the base material welding. The weld appearance should transition uniformly, densely, and smoothly to the base material, without cracks, incomplete fusions, or defects such as excessive undercuts, porosities, slag inclusions, or craters beyond specified limits.

Further, during the welding process of titanium cladding layer, pure copper intermediate layer, and steel base layer, the surface of each previously welded layer should be ground flat using an angle grinder, and the inner and outer walls of the groove should be wiped with industrial alcohol.

Further, after the welding of titanium cladding layer, pure copper intermediate layer, and steel base layer is completed, an inspection is carried out using penetrant testing to ensure that the corrosion resistance of the welded joint meets qualification requirements.

Further, during the welding process of titanium cladding layer, stress relief treatment is carried out by means of tapping and vibration, and a welding height of the titanium cladding layer is 0.4-0.6 mm from the titanium steel interface.

Compared with prior arts, the present invention has the following beneficial effects:
1. When welding small-diameter bent pipes made of titanium-steel composite plats, selecting a single-sided V-groove configuration in combination with a complete welding procedure enables a full-size fusion welded joint, expanding the scope of welding applications.
2. Materials required for the entire welding process are commonly available materials on the market. Specifically, the steel base layer uses matching steel welding materials based on the base material, the titanium cladding layer uses matching titanium welding materials, and for the welding of the intermediate layer and deep processing of the groove, pure copper welding materials are used, ensuring both high cost-effectiveness and practicality.
3. Timely stress relief treatment and the use of protective gas ensure the quality of the titanium-side welding.
4. During subsequent welding, the use of water cooling device prevents the formation of titanium-iron compounds and the like near the 0-1 mm vicinity of the titanium/steel interface due to transitory high temperatures.
5. By combining an intermediate welding material, a specific groove configuration, groove deep processing techniques, and a matched welding procedure, a crack-free welded joint is formed. Compared to traditional patch welding methods, the welding process of the present invention exhibits significantly superior dynamic load-bearing capacity, which can significantly improve the service life of joints and effectively enhance the service reliability of titanium-steel composite plate weldments. In the present invention, the potential of the weld position of the welded joint is higher than that of the base material, accelerating the dissolution rate of the base material acting as anode while protecting the weld acting as cathode, thereby ensuring the corrosion resistance of the titanium layer.

### BRIEF DESCRIPTION OF THE DRAWINGS

FIG.1 is a flow schematic diagram of the process of the present invention.
FIG.2 is a macroscopic metallographic structure diagram of the welded joint of titanium-steel composite plate in Example 1 of the present invention.
FIG. 3 is a SEM mapping image of the titanium cladding layer-titanium weld in Example 1 of the present invention.
FIG.4 is a SEM line line scan image of the titanium cladding layer-titanium weld in Example 1 of the present invention.
FIG.5 is a SEM line scan image of the carbon steel-intermediate layer-titanium weld in Example 1 of the present invention.
FIG. 6 is a schematic diagram of the welding groove in Example 1 of the present invention.
FIG. 7 is a schematic diagram of the welding groove in Example 2 of the present invention.

### DETAILED DESCRIPTION OF THE EMBODIMENTS

The drawings used in the embodiments or the prior art will be briefly described herein to more clearly describe the embodiments of the present application or the technical solutions in the prior art. Apparently, the following described drawings are merely some embodiments of the present invention. For those ordinary skilled in the art, other drawings can also be obtained according to the provided drawings without creative work.

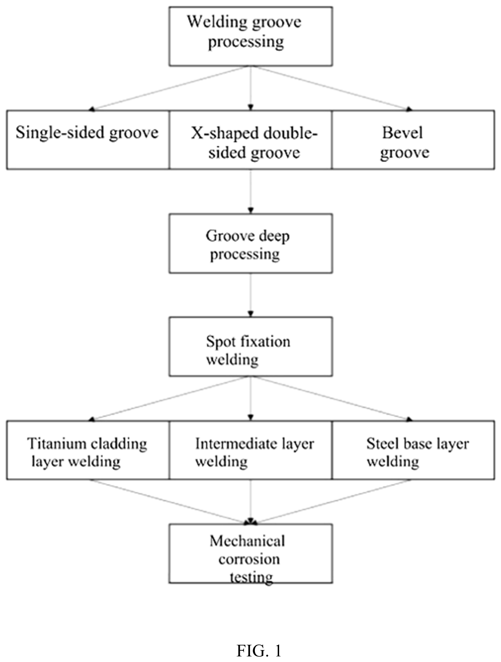

A fusion welding process for titanium-steel composite plates proposed by the present invention is shown in FIG. 1, including the following steps:
Machine a welding groove on a titanium-steel composite plate to be welded. Different groove forms are employed based on different uses of the titanium-steel composite plate, such as single-sided groove, X-groove (double-V groove), and fillet groove. For example, during pipe welding, with the titanium side on the inner side of the pipe, the carbon steel side requires greater material removal. The groove is machined to remove an appropriate thickness of carbon steel, ensuring a clearer bonding interface and preventing elemental diffusion. The machining at the titanium/steel interface should be performed in a single continuous cut without tool change. In addition, oxides is firstly removed from the weld preparation area on the carbon steel side using an angle grinder prior to welding, and the interface is wiped with industrial alcohol until it reveals a metallic luster.

Perform deep processing on the welding groove, including using CMT welding to perform copper cladding treatment on the titanium/steel interface of the groove on the titanium-steel composite plate to be welded. The CMT welding torch is fixed by a fixture to make its welding angle relative to the titanium/steel interface remain consistent with the flat welding position. Specifically, the welding current is 120-200 A, the welding speed is 200-400 mm/min, the swing width of welding torch is 1-2 mm, the fusion ratio of welded joint is controlled to be 0.2-0.5, and the height of the copper cladding layer at the titanium/steel interface is less than 1 mm, which isolates titanium and carbon steel to prevent elemental diffusion at high temperatures and the resulting formation of brittle phases.

Perform tack welding on two cladding-treated composite plates.

Perform welding of titanium cladding layer, pure copper intermediate layer, and steel base layer.

The welding process of titanium cladding layer is protected by a protective trailing shield and a high flow of gas flow. At the same time, stress relief treatment is carried out by means of tapping and vibration, and the welding height of the titanium cladding layer is 0.4-0.6 mm from the titanium steel interface.

The welding process of pure copper intermediate layer is protected by argon and uses CMT welding with a gas flow rate of 10-20 L/min, a welding current of 160-200 A, a welding speed of 200-350 mm/min, and a swing width of the welding torch matching with the groove width. During the welding process, a water cooling device is provided on a backside of the composite plate to ensure uniform coverage of the copper intermediate layer with a welding thickness of 1-2 mm, guaranteeing that no titanium-iron compounds form near the titanium/steel interface within 0-1 mm due to transitory high temperatures.

During the welding process of steel base layer, a water cooling device maintains continuous water flow, and the selections of welding materials and processes are based on the base material welding. The weld appearance should be transition uniformly, densely, and smoothly to the base material, without cracks, incomplete fusions, or defects such as excessive undercuts, porosities, slag inclusions, or craters beyond specified limits.

The welding of titanium cladding layer, pure copper intermediate layer, and steel base layer has no fixed order, and the welding order is selected according to different groove forms. Besides, the surface of each previously welded layer should be ground flat using an angle grinder, and the inner and outer walls of the groove should be wiped with industrial alcohol.

After the welding is completed, an inspection is carried out using penetrant testing to ensure that the corrosion resistance of the welded joints meets qualification requirements.

The present invention is further illustrated below through the some examples:

### Example 1

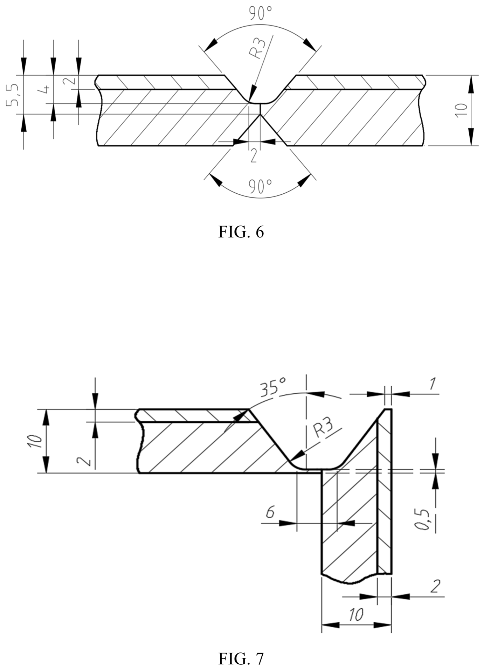

This example was applied to the welding of a large-diameter drum structure made of 2+8 mm TA2/Q235 titanium-steel composite plate, and the implementation process was as follows:
Two composite plates to be welded were machined with an X-groove, with dimensions as shown in FIG. 6. Specifically, a 90° groove was machined on the titanium side, with a groove depth of 4 mm, and a circular arc transition with a radius of 3 mm at the bottom of the groove. Similarly, a 90° groove was machined on the carbon steel side, with a groove depth of 4.5 mm. In addition, the portion between the two grooves was a root face with a thickness of 1.5 mm. The two grooves were machined to remove an appropriate thickness of carbon steel, ensuring a clearer bonding interface and preventing elemental diffusion. The machining at the titanium/steel interface was performed in a single continuous cut without tool change. Additionally, oxides was firstly removed from the weld preparation area on the carbon steel side using an angle grinder prior to welding, and the interface was wiped with industrial alcohol until it revealed a metallic luster.

Deep processing was then performed on the grooves on the two composite plates. Specifically, CMT welding was used to perform copper cladding treatment on the titanium/steel interface of the grooves. The CMT welding torch was fixed by a fixture to make its welding angle relative to the titanium/steel interface remained consistent with the flat welding position. Specifically, the welding current was 160 A, the welding speed was 20 mm/min, the swing width of the welding torch was 1.5 mm, the fusion ratio of welded joint was controlled to be 0.4, and the height of the copper cladding layer at the titanium/steel interface was 0.8 mm, to isolates titanium and carbon steel to prevent elemental diffusion at high temperatures and the resulting formation of brittle phases.

Tack welding was performed on the two cladding-treated composite plates.

Then, the welding of the pure copper intermediate layer was performed firstly. The welding was carried out using CMT welding with argon used as protective gas, with a gas flow rate of 15 L/min, a welding current of 200 A, a welding speed of 350 mm/min, and a swing width of the welding torch matching with the groove width. During the welding process, a water cooling device was provided on the backside of the composite plate to ensure uniform coverage of the copper intermediate layer with a welding thickness of 2 mm, guaranteeing that no titanium-iron compounds form near the titanium/steel interface within 0-1 mm due to transitory high temperatures.

The surface of the copper intermediate layer was ground flat by using an angle grinder, and the inner and outer walls of the groove were wiped with industrial alcohol, followed by performing welding on the steel side. During the welding on the steel side, the water cooling device maintained continuous water flow, CMT welding was employed for the welding using H08Mn2Si welding wire as welding material, with a welding current of 260 A and a welding speed of 250 mm/min.

Finally, the welding of the titanium cladding layer was performed. The welding process was protected by a protective trailing shield and a high flow of gas. The gas flow rate for both the trailing shield and the welding torch was 16 L/min. At the same time, stress relief treatment was carried out by vibration. TIG welding was employed for the welding, with a welding current of 160 A and a welding speed of 118 mm/min.

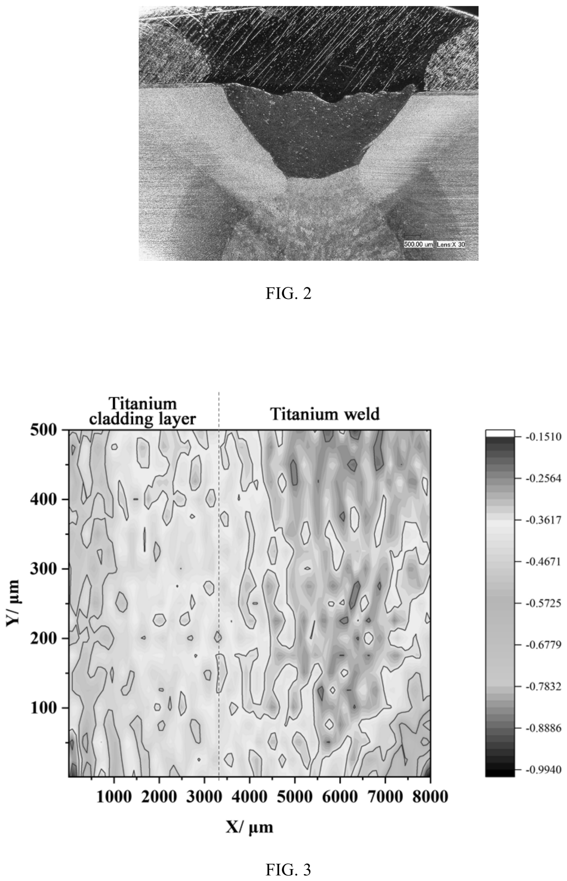

The macroscopic metallographic structure diagram of the welded joint is shown in FIG 2. The weld appearance should transition uniformly, densely, and smoothly to the base material, without cracks, incomplete fusions, or defects such as excessive undercuts, porosities, slag inclusions, or craters beyond specified limits.

After completion of all the welding, an inspection was carried out using penetrant testing to ensure that the corrosion resistance of the welded joint meets qualification requirements.

The surface of the welded titanium layer appears light blue, meeting color requirements and passing the dye penetrant testing inspection. Mechanical and corrosion performance tests were conducted on the welded joint. The mechanical performance of the joint meets the requirements of Chinese national standards. Since the welding process of the present invention forms a integral welded joint, its ability to bear dynamic loads is greatly enhanced. Therefore, a fatigue test were conducted for the welded joint of the titanium-steel composite plate, using four different maximum dynamic loads for evaluation. The test results are shown in Table 1. Under various dynamic load conditions, the fatigue life of the welded joint of the titanium-steel composite plate obtained by the welding process of the present invention is more than 65 times higher than that of the joint welded by traditional welding methods. Specifically, at a maximum dynamic load of 28 kN, the fatigue life of the welded joint obtained by the welding process of the present invention exceeds that of the joint welded by traditional welding methods by over 1000 times. At a maximum dynamic load of 21 kN, the fatigue life of the welded joint obtained by the welding process of the present invention exceeds that of the joint welded by traditional welding methods by over 100 times, with no cracks observed in the joint. Therefore, the welding process of the present invention significantly prolongs the service life of joints and effectively improves the reliability of titanium-steel composite plate weldments in service.

**Table 1 Statistical table of fatigue test results for welded joints of titanium-steel composite plates**

| No. (F1- /F2- ) | K | Pₘₐₓ/kN | Pₘᵢₙ/kN | Fatigue life, N/×10⁴ | |
|---|---|---|---|---|---|
| | | | | Traditional welding process | Welding process of the present invention |
| 1 | 0.6 | 40 | 4.0 | 0.95 | 136.73 |
| 2 | 0.52 | 34 | 3.4 | 3.13 | 203.91 |
| 3 | 0.43 | 28 | 2.8 | 5.19 | 5222.8 (Crack-free) |
| 4 | 0.32 | 21 | 2.1 | 57.13 | 5800.20 (Crack-free) |

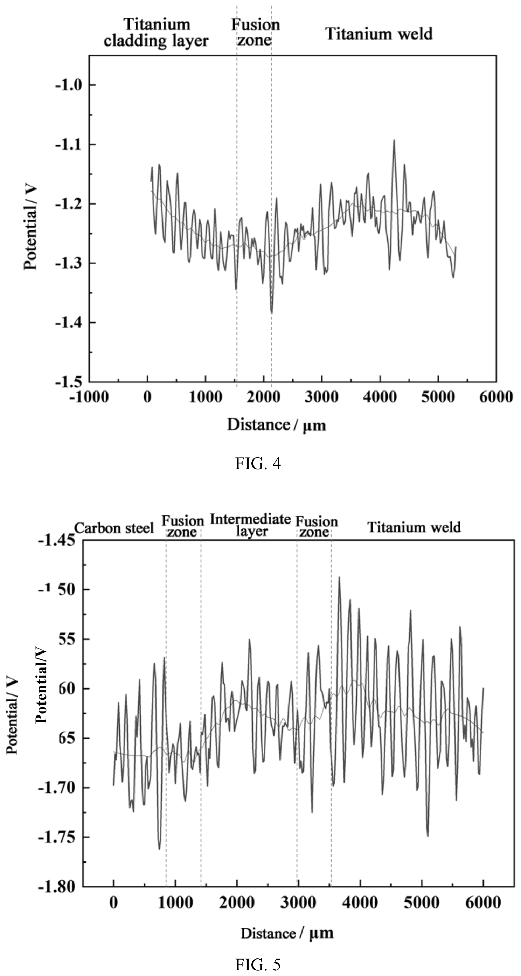

The corrosion resistance of the welded joint obtained using the welding process of the present invention was tested and analyzed. The test results are shown in FIGs. 3 to 5. The potential of the titanium weld is higher than that of the titanium cladding layer. The titanium cladding layer acts as the anode, accelerating the dissolution rate of the base material acting as anode while protecting the weld acting as cathode, thereby ensuring the excellent corrosion resistance of the titanium cladding layer.

### Example 2

This example was applied to the welding of a fillet structure made of 2+8 mm TA2/Q335 titanium-steel composite plate, and the implementation process was as follows:
Two composites plates to be welded were machined with a fillet groove, with dimensions as shown in FIG. 7. Specifically, for the horizontal-position composite plate, the groove angle was 35°, with a circular arc transition of 3 mm radius at the bottom of the groove, and the root face on the steel base was 0.5 mm. For the vertical-position composite plate, the groove angle was 35°, with a circular arc transition of 3 mm radius on the steel base of the groove, and the root face on the titanium cladding layer was 1 mm. The steel bases of the two composite plates to be welded were aligned at an angle of 90 °. The grooves were machined to remove an appropriate thickness of carbon steel, ensuring a clearer bonding interface and preventing elemental diffusion. The machining of the titanium/steel interface should be performed in a single continuous cut without tool change. In addition, oxides was firstly removed from the weld preparation area on the carbon steel side using an angle grinder prior to welding, and the interface is wiped with industrial alcohol until it revealed a metallic luster.

Deep processing was then performed on the grooves on the two composite plates. Specifically, CMT welding was used to perform copper cladding treatment on the titanium/steel interface of the grooves. The CMT welding torch was fixed by a fixture to make its welding angle relative to the titanium/steel interface remained consistent with the flat welding position. Specifically, the welding current was 200 A, the welding speed was 400 mm/min, the swing width of the welding torch was 1 mm, the fusion ratio of welded joint was controlled to be 0.2, and the height of the copper cladding layer at the titanium/steel interface was 0.9 mm, to isolate titanium and carbon steel to prevent elemental diffusion at high temperatures and the resulting formation of brittle phases.

Tack welding was performed on the two cladding-treated composite plates.

Then, the welding of the steel base layer was performed firstly. CMT welding was employed for the welding using H08Mn2Si welding wire as welding material, with a welding current of 300 A and a welding speed of 300 mm/min.

The steel base layer surface was ground flat by using an angle grinder, and the inner and outer walls of the grooves were wiped with industrial alcohol, followed by performing welding of the pure copper intermediate layer. The welding was carried out using CMT welding with argon used as protective gas, with a gas flow rate of 20 L/min, a welding current of 180 A, a welding speed of 280 mm/min, and a swing width of the welding torch matching with the groove width. Additionally, during the welding process, a water cooling device was provided on the backside of the composite plate to ensure uniform coverage of the copper intermediate layer with a welding thickness of 1.5 mm, guaranteeing that no titanium-iron compounds form near the titanium/steel interface within 0-1 mm due to transitory high temperatures.

Finally, the welding of the titanium cladding layer was performed. The welding process was protected by a protective trailing shield and a high flow of gas. The gas flow rate for both the trailing shield and the welding torch was 16 L/min. At the same time, stress relief treatment was carried out by vibration. TIG welding was employed for the welding, with a welding current of 190 A and a welding speed of 120 mm/min.

The weld appearance should transition uniformly, densely, and smoothly to the base material, without cracks, incomplete fusions, or defects such as excessive undercuts, porosities, slag inclusions, or craters beyond specified limits.

After completion of all the welding, an inspection was carried out using penetrant testing to ensure that the corrosion resistance of the welded joint meets qualification requirements. The surface of the welded titanium layer appears light-blue, meeting color requirements and passing the dye penetrant testing inspection.

The mechanical performance of the joint meets the requirements of Chinese national standards, the ability to bear dynamic loads is significantly enhanced, and the corrosion resistance is consistent with that of the base material.

### Example 3

This example was applied to the welding of a pipe structure made of 4+16mm TA2/X65 titanium-steel composite plate, and the implementation process was as follows:
Two composite plates to be welded were machined with a common V-groove with a groove angle of 60°. The titanium side was on the inner side of the pipe structure. The groove was machined to remove an appropriate thickness of carbon steel, ensuring a clearer bonding interface and preventing elemental diffusion. The machining of the titanium/steel interface was performed in a single continuous cut without tool change. Additionally, oxides was firstly removed from the weld preparation area on the carbon steel side using an angle grinder prior to welding, and the interface was wiped with industrial alcohol until it revealed a metallic luster.

Deep processing was then performed on the groove on the two composite plates. Specifically, CMT welding was used to perform copper cladding treatment on the titanium/steel interface of the groove. The CMT welding torch was fixed by a fixture to make its welding angle relative to the titanium/steel interface remained consistent with the flat welding position. Specifically, the welding current was 120 A, the welding speed was 300 mm/min, the swing width of the welding torch was 2 mm, and the height of the copper cladding layer at the titanium/steel interface was 0.6 mm, to isolates titanium and carbon steel to prevent elemental diffusion at high temperatures and the resulting formation of brittle phases.

Tack welding was performed on the two cladding-treated composite plates.

Then, the welding of the titanium cladding layer was performed firstly. The welding process was protected by a protective trailing shield and a high flow of gas. The gas flow rate for both the trailing shield and the welding torch was 18 L/min. At the same time, stress relief treatment was carried out by tapping. The welding height of the cladding layer was about 0.5 mm from the titanium/steel interface.

The surface of the titanium cladding layer was ground flat by using an angle grinder, and the inner and outer walls of the groove were wiped with industrial alcohol, and followed by performing welding of the pure copper intermediate layer. The welding was carried out using CMT welding with argon used as protective gas, with a gas flow rate of 10 L/min, a welding current of 160 A, a welding speed of 200 mm/min, and a swing width of the welding torch matching with the groove width. During the welding process, a water cooling device was provided on the backside of the composite plate to ensure uniform coverage of the copper intermediate layer with a welding thickness of 1 mm, guaranteeing that no titanium-iron compounds form near the titanium/steel interface within 0-1 mm due to transitory high temperatures.

The surface of the pure copper intermediate layer was ground for flat by using an angle grinder, and the inner and outer walls of the groove were wiped with industrial alcohol, followed by performing welding on the steel side. During the welding on the steel side, the water cooling device maintained continuous water flow. CMT welding was employed for the welding using welding material selected based on the base material X65 steel, with a welding current of 320 A and a welding speed of 300 mm/min.

The weld appearance should transition uniformly, densely, and smoothly to the base material, without cracks, incomplete fusions, or defects such as excessive undercuts, porosities, slag inclusions, or craters beyond specified limits.

After completion of all the welding, an inspection was carried out using penetrant testing to ensure that the corrosion resistance of the welded joint meets qualification requirements. The surface of the welded titanium layer appears light-blue, meeting color requirements and passing the dye penetrant testing inspection.

The mechanical performance of the joint meets the requirements of Chinese national standards, the ability to bear dynamic loads is significantly enhanced, and the corrosion resistance is consistent with that of the base material.

Matters not detailed in the present invention are well-known technologies.

The aforementioned examples are only description of preferred implementations of the present invention and are not intended to limit its scope. Without deviating from the design spirit of the present invention, various modifications or improvements made to the technical solutions of the present invention by those ordinary skilled in the art shall fall within the protection scope defined by the claims of the present invention.

## Claims

1. A fusion welding process for titanium-steel composite plates, comprising the following steps of:
machining a welding groove on a titanium-steel composite plate to be welded, wherein different groove forms are employed based on different uses of the titanium-steel composite plate;
performing deep processing on the welding groove, including using CMT welding to perform copper cladding treatment on a titanium/steel interface of the groove on the titanium-steel composite plate to be welded;
performing tack welding on two cladding-treated composite plates; and
performing welding of titanium cladding layer, pure copper intermediate layer, and steel base layer, wherein the welding of titanium cladding layer, pure copper intermediate layer, and steel base layer has no fixed order, and the welding order is selected according to different groove forms.

2. The fusion welding process for titanium-steel composite plates according to claim 1, wherein the groove is machined to remove an appropriate thickness of carbon steel, and the machining at the titanium/steel interface is performed in a single continuous cut without tool change, then oxides is firstly removed from a weld preparation area on the carbon steel side using an angle grinder prior to welding, and the interface is wiped with industrial alcohol until it reveals a metallic luster.

3. The fusion welding process for titanium-steel composite plates according to claim 1, wherein the copper cladding treatment on the titanium/steel interface of the groove using CMT welding comprises the following parameters: a welding current of 120-200 A, a welding speed of 200-400 mm/min, a swing width of a welding torch of 1-2 mm, a fusion ratio of a welded joint controlled to be 0.2-0.5, and a height of the copper cladding at the titanium/steel interface of less than 1 mm.

4. The fusion welding process for titanium-steel composite plates according to claim 1, wherein the welding process of titanium cladding layer is protected by a high flow of gas.

5. The fusion welding process for titanium-steel composite plates according to claim 1, wherein the welding process of pure copper intermediate layer is protected by argon and uses CMT welding with a gas flow rate of 10-20 L/min, a welding current of 160-200 A, a welding speed of 200-350 mm/min, and a swing width of a welding torch matching with the groove width; and during the welding process, a water cooling device is provided on a backside of the composite plate to ensure uniform coverage of the copper intermediate layer with a welding thickness of 1-2 mm on the carbon steel surface, guaranteeing that no titanium-iron compounds form near the titanium/steel interface within 0-1 mm due to transitory high temperatures.

6. The fusion welding process for titanium-steel composite plates according to claim 1, wherein during the welding process of steel base layer, a water cooling device maintains continuous water flow, and selection of welding materials and processes are based on the base material welding; and the weld appearance should transition uniformly, densely, and smoothly to the base material, without cracks, incomplete fusions, or defects such as excessive undercuts, porosities, slag inclusions, or craters beyond specified limits.

7. The fusion welding process for titanium-steel composite plates according to claim 1, wherein during the welding process of titanium cladding layer, pure copper intermediate layer, and steel base layer, the surface of each previously welded layer is ground flat using an angle grinder, and the inner and outer walls of the groove are wiped with industrial alcohol.

8. The fusion welding process for titanium-steel composite plates according to claim 1, wherein after completion of the welding of titanium cladding layer, pure copper intermediate layer, and steel base layer, an inspection is carried out using penetrant testing to ensure that the corrosion resistance of the welded joint meets qualification requirements.

9. The fusion welding process for titanium-steel composite plates according to claim 1, wherein during the welding process of titanium cladding layer, stress relief treatment is carried out by means of tapping and vibration, and a welding height of the titanium cladding layer is 0.4-0.6 mm from the titanium/steel interface.
